# EUROPEAN PATENT APPLICATION

(11) **EP 4 586 669 A1**
(43) Date of publication of application: **16.07.2025**
(21) Application number: 23912537.0
(22) Date of filing: 03.11.2023
(51) Int. Cl.: H04W 24/02, H04W 28/086, H04L 27/20, H04L 27/34, H04W 88/08, H04W 92/20, H04W 28/08, H04L 69/30, H04W 40/02

(54) **METHOD AND APPARATUS FOR TRANSMITTING AND RECEIVING DATA DURING SCALING IN WIRELESS COMMUNICATION SYSTEM**

(30) Priority: 26.12.2022 KR 20220184833; 28.04.2023 KR 20230056583
(71) Applicant: Samsung Electronics Co., Ltd., Suwon-si, Gyeonggi-do 16677 (KR)
(72) Inventor: PARK, Seonjun, Suwon-si, Gyeonggi-do 16677 (KR); KWON, Joonhwan, Suwon-si, Gyeonggi-do 16677 (KR); PARK, Hanjung, Suwon-si, Gyeonggi-do 16677 (KR); AHN, Heungseop, Suwon-si, Gyeonggi-do 16677 (KR)
(74) Representative: Appleyard Lees IP LLP
(86) International application number: PCT/KR2023/017447
(87) International publication number: WO 2024/143857

(57) **Abstract**

In an embodiment, an operation method of a front-haul splitter in a wireless communication system may be provided. The front-haul splitter may respectively receive first downlink in-phase and quadrature (IQ) data and second downlink IQ data from a first distributed unit (DU) and a second DU that are connected to the front-haul splitter. The front-haul splitter may generate third downlink IQ data, based on the first downlink IQ data and the second downlink IQ data. The front-haul splitter may transmit the third downlink IQ data to a radio unit (RU) connected to the front-haul splitter.

## Description

### TECHNICAL FIELD

In an embodiment, a method and apparatus for transmitting and receiving data during scaling in a wireless communication system may be provided.

### BACKGROUND ART

In existing radio access network (RAN) systems, a distributed unit (DU) is connected one-to-one to a cell site, and the processing capacity of the DU is determined based on maximum traffic that can flow into the cell site. However, times when the maximum traffic occurs are limited, and a significant number of DU resources may not be used outside of these times. Therefore, the DU resources cannot be used efficiently.

Virtualized DU (vDU) pooling may refer to a technology capable of reducing the number of servers required to build a RAN system by breaking a 1:1 relationship between an existing DU and a cell site (a set of radio units (RUs)) and pooling and virtualizing DUs. (capital expenditure (CAPEX) reduction) For example, before vDU pooling, four DUs, i.e., four servers, are required, but after vDU pooling, traffic coming from four cell sites may be handled using only three servers. In this way, because only three physical servers are actually operating, vDU pooling may also save power consumption compared to an existing RAN system that uses four physical servers. (operational expenditure (OPEX) reduction)

In the above example, only DU pooling is described, but centralized units (CUs) may also be pooled like DUs. A RAN system that reduces CAPEX & OPEX by pooling and virtualizing DUs and CUs in this way is referred to as a virtualized RAN (vRAN) system.

In such a vRAN system environment, there is a need for a method capable of efficiently transmitting and receiving data.

### DISCLOSURE OF INVENTION

### SOLUTION TO PROBLEM

In an embodiment, an operation method of a front-haul splitter in a wireless communication system may be provided. The front-haul splitter may respectively receive first downlink in-phase and quadrature (IQ) data and second downlink IQ data from a first distributed unit (DU) and a second DU that are connected to the front-haul splitter. The front-haul splitter may generate third downlink IQ data, based on the first downlink IQ data and the second downlink IQ data. The front-haul splitter may transmit the third downlink IQ data to a radio unit (RU) connected to the front-haul splitter.

### BRIEF DESCRIPTION OF DRAWINGS

FIG. 1 is a diagram illustrating a wireless communication system according to an embodiment.
FIG. 2A is a diagram illustrating a wireless communication system before scale-out is performed, according to an embodiment.
FIG. 2B is a diagram illustrating a communication system in a state in which scale-out is being performed, according to an embodiment.
FIG. 2C is a diagram illustrating a communication system after scale-out is completed, according to an embodiment.
FIG. 3 is a device diagram of a front-haul splitter according to an embodiment.
FIG. 4 is a diagram illustrating an operation method of a front-haul splitter, according to an embodiment.
FIG. 5 is a diagram illustrating a method, performed by a front-haul splitter, of processing downlink data, according to an embodiment.
FIG. 6 is a diagram illustrating in-phase and quadrature (IQ) data according to an embodiment.
FIG. 7 is a diagram illustrating a transmission resource in which IQ data is transmitted, according to an embodiment.
FIG. 8A is a diagram illustrating a modulation scheme for downlink data transmitted on a physical downlink control channel (PDCCH) and a physical broadcast channel (PBCH), according to an embodiment.
FIG. 8B is a diagram illustrating a modulation scheme for downlink data transmitted on a physical downlink shared channel (PDSCH), according to an embodiment.
FIG. 9 is a diagram illustrating a method, performed by a front-haul splitter, of processing uplink data, according to an embodiment.
FIG. 10A is a diagram illustrating a communication system including a front-haul splitter, according to an embodiment.
FIG. 10B is a diagram illustrating an in-distributed unit (DU) embedded communication system including a DU pool 20 having a front-haul splitter therein, according to an embodiment.
FIG. 10C is a diagram illustrating an in-radio unit (RU) embedded communication system including an RU having a front-haul splitter therein, according to an embodiment.
FIG. 11 is a diagram illustrating a front-haul interface according to an embodiment.

### MODE FOR THE INVENTION

Throughout the present disclosure, the expression "at least one of a, b or c" indicates only a, only b, only c, both a and b, both a and c, both b and c, all of a, b, and c, or variations thereof.

The terms used in the present disclosure may be general terms currently widely used in the art by taking into account functions described herein, but may vary according to an intention of a technician engaged in the art, precedent cases, advent of new technologies, etc. Furthermore, specific terms may be arbitrarily selected by the applicant, and in this case, the meaning of the selected terms will be described in detail in the relevant description. Thus, the terms used herein should be defined not by simple appellations thereof but based on the meaning of the terms together with the overall description of the present disclosure.

Singular expressions used herein are intended to include plural expressions as well unless the context clearly indicates otherwise. All the terms used herein, which include technical or scientific terms, may have the same meaning that is generally understood by one of ordinary skill in the art. Furthermore, although the terms including an ordinal number such as "first", "second", etc. may be used herein to describe various elements or components, these elements or components should not be limited by the terms. The terms are only used to distinguish one element or component from another element or component.

Throughout the specification, when a part "includes" or "comprises" an element, unless there is a particular description contrary thereto, it is understood that the part may further include other elements, not excluding the other elements. In addition, terms such as "unit", "module", etc., described herein refer to a unit for processing at least one function or operation and may be implemented as hardware or software, or a combination of hardware and software.

Embodiments of the present disclosure will be described more fully hereinafter with reference to the accompanying drawings so that they may be easily implemented by one of ordinary skill in the art. However, the present disclosure may be implemented in many different forms and should not be construed as being limited to an embodiment set forth herein. Furthermore, parts not related to the descriptions are omitted to clearly explain the present disclosure in the drawings, and like reference numerals denote like elements throughout. In addition, reference numerals used in each drawing are only intended to describe each drawing, and different reference numerals used in different drawings are not intended to indicate different elements. Hereinafter, the present disclosure is described in detail with reference to the accompanying drawings.

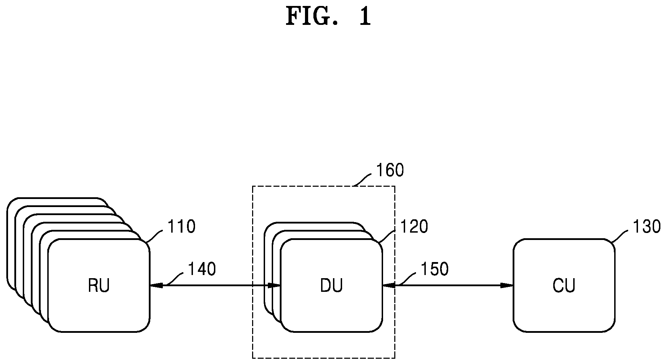

FIG. 1 is a diagram illustrating a wireless communication system according to an embodiment.

In the present disclosure, a wireless communication system may include at least one radio unit (RU) 110, at least one distributed unit (DU) 120, and a centralized unit (CU) 130. In the present disclosure, the wireless communication system may refer to, but is not limited to, a virtualized radio access network (vRAN). For example, the wireless communication system may include a fifth-generation (5G) system (5GS), a fourth-generation (4G) system (4GS), or other wireless communication systems, and may also refer to a wireless communication system to be developed in the future.

In the present disclosure, splitting the functions of layers handled by the CU 130 and the DU 120 among protocol layers of a network may be referred to as a higher layer split.

The CU 130 may refer to an entity performing functions of some of the protocol layers of the network. For example, the CU 130 may refer to an entity performing network functions of a Radio Resource control (RRC) layer and a Packet Data Convergence Protocol (PDCP) layer. However, the functions of some of the layers that may be handled by the CU 130 are not limited to those of the RRC layer and the PDCP layer. For example, the CU 130 may refer to a virtualized CU (vCU) of a vRAN system, but is not limited thereto.

A DU pool 160 may refer to a set including the at least one DU 120.

The DU 120 may be an entity performing functions of some of the remaining protocol layers of the network other than the layers whose functions are performed by the CU 130. For example, the DU 120 may refer to an entity that performs network functions (e.g., baseband functions) of a Radio Link Control (RLC) layer, a Medium Access Control (MAC) layer, and a Physical (PHY) layer. However, the functions of some of the layers that may be handled by the DU 120 are not limited to those of the RLC layer, the MAC layer, and the PHY layer. For example, the DU 120 may refer to a virtualized DU (vDU) of the vRAN system, but is not limited thereto. For example, the DU 120 may correspond to a processing pod, a component module, a processing operation unit, a deployment unit performing some processing, or the like. For example, the DU 120 may correspond to a server.

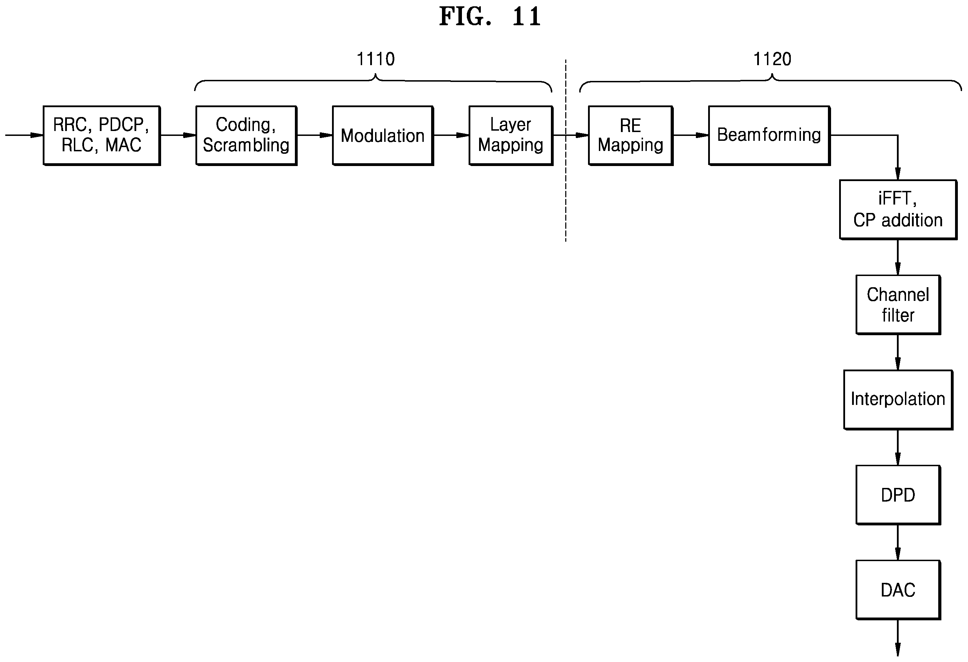

In the present disclosure, splitting the functions of layers handled by the DU 120 and the RU 110 among the protocol layers of the network may be referred to as a lower layer split. For example, functions of the PHY layer handled by the DU 120 may be further split between the DU 120 and the RU 110. The lower-layer split is described in more detail below with reference to FIG. 11.

The RU 110 may refer to an entity that performs some of the functions of the PHY layer other than functions handled by DU 120. For example, the RU 110 may refer to a virtualized RU (vRU) of the vRAN system, but is not limited thereto.

One CU 130 may be connected to N DUs 120, where N may be any integer greater than 1. The CU 130 and the DU 120 may be connected via an interface 150. For example, the interface 150 between the CU 130 and the DU 120 may be an F1 interface. For example, the functions of the RRC layer and the PDCP layer that may be handled by the CU 130 may be centralized, and thus, anchor changes in the RRC layer and the PDCP layer may not be performed during a baseband handover across the DUs 120. Thus, the quality of services associated with handovers occurring within the same CU 130 may be improved. In addition, the CU 130 may increase resource efficiency by pooling resources across multiple DUs 120.

One DU 120 may be connected to M RUs 110, where M may be any integer greater than 1. The DU 120 and the RU 110 may be connected via an interface 140, and for example, the interface 140 between the DU 120 and the RU 110 may be a front-haul interface. As a non-limiting example, the interface 140 between the DU 120 and the RU 110 may be ORAN FH (option 7.2) in the open RAN (ORAN) or IF4p5 (option 7.2x) in OAI.

One DU 120 may manage at least one cell (not shown). In addition, each cell may correspond to the RU 110 ( i.e., the cell and the RU 110 have a one-to-one relationship). Therefore, the cells and the RUs 110 connected to the one DU 120 may be connected via a 1:1 interface.

In the present disclosure, the number of DUs 120 in the DU pool 160 may be increased or decreased. When the DU 120 is added to the DU pool 160, a processing pod corresponding to the DU 120 may be increased to distribute the added DU 120.

Referring to FIG. 1, the RU 110, the DU 120, and the CU 130 may be configured with a topology of M:N:1 (M>>N>>1). Each DU 120 may be allocated enough computational resources to process the maximum data capacity of the RU 110. In this case, if traffic handled by the RU 110 is about 20% of the maximum data capacity of the RU 110, more resources than necessary are allocated to the DU 120. Therefore, the static resource allocation method as described above increases the investment cost of the server and causes an increase in power consumption.

Accordingly, in the vRAN system, a vDU scaling method may be used to efficiently use server resources by dynamically scaling in or out the DU 120 according to a current traffic situation. However, because a current wireless communication system does not support dynamically scaling in or out the DU 120, there is a need for a method capable of scaling the DU 120 without disconnecting a terminal (or a user equipment (UE)) connected to the RU 110.

In the present disclosure, a method of performing seamless DU scale-out and scale-in may be provided with reference to the following drawings.

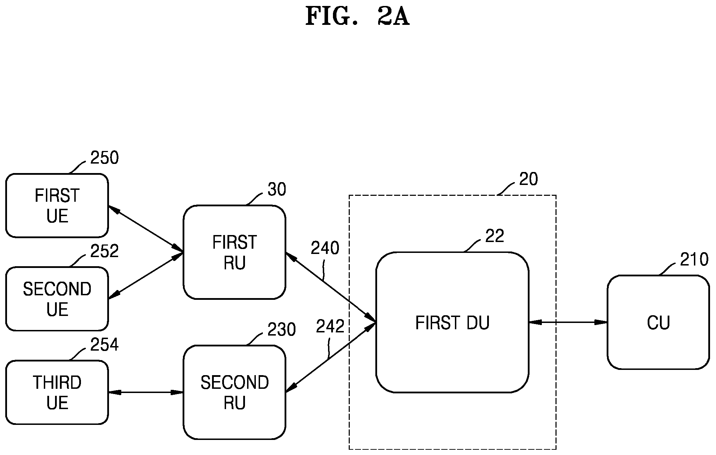

FIG. 2A is a diagram illustrating a wireless communication system before scale-out is performed, according to an embodiment.

The DU pool 20 may include a first DU 22. Although not shown in FIG. 2A, the DU pool 20 may further include at least one more DU.

One CU 210 may be connected to the first DU 22, and the first DU 22 may be connected to a first RU 30 and a second RU 230. The first DU 22 may be connected to the first RU 30 via a first front-haul interface 240, and may be connected to the second RU 230 via a second front-haul interface 242.

The first DU 22 manages two cells, i.e., a first cell and a second cell. The first RU 30 may correspond to the first cell, and the first cell may include a first UE 250 and a second UE 252. The second RU 230 may correspond to the second cell, and the second cell may include a third UE 254. The first RU 30 may be connected to the first UE 250 and the second UE 252, and the second RU 212 may be connected to the third UE 254. However, FIG. 2A is only a diagram illustrating an example of the wireless communication system, and the wireless communication system may further include a plurality of UEs, a plurality of RUs, and a plurality of DUs.

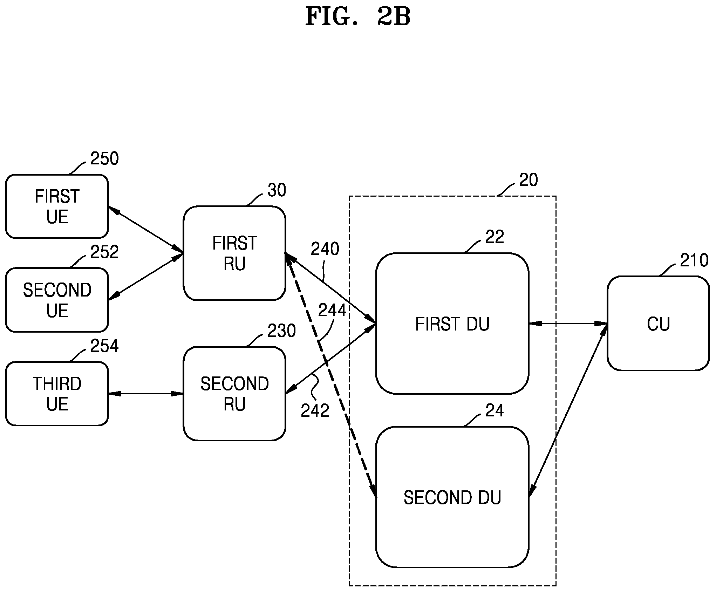

FIG. 2B is a diagram illustrating a communication system in a state in which scale-out is being performed, according to an embodiment.

When the amount of data generated in the first cell increases, the amount of data that needs to be processed by the first DU 22 may increase. In this case, to prevent excessive traffic processing load on the first DU 22, it may be necessary to effectively process the data generated in the first cell. At this time, the wireless communication system may use a new DU to process the data generated in the first cell. In this case, an RU associated with the first cell may also be migrated to the new DU.

In an embodiment, the first RU 30 may refer to an RU corresponding to the first cell, from which the data is to be transferred, and may refer to a migrate RU to be migrated.

When the amount of traffic to be handled in the first DU 22 increases, a second DU 24 may be added to the DU pool 20 to distribute or migrate and handle the increased traffic. The second DU 24 may refer to a DU to which scale-out is applied.

In the present disclosure, scale-out may refer to adding the second DU 24 to the DU pool 20. For example, when the amount of traffic that the first DU 22 included in the DU pool 20 needs to handle increases, the second DU 24 may be added. Adding the second DU 24 to the DU pool 20 may refer to adding a processing pod corresponding to the second DU 24 to the DU pool 20. For example, adding the second DU 24 to the DU pool 20 may mean that an additional server capable of processing data starts operating. By using scale-out, the second DU 24 (a server with similar specifications, as a non-limiting example) may be added to the communication system when the capacity or performance of the first DU 22 (e.g., an existing server) to process data reaches its limit.

In the present disclosure, scale-in may refer to removing the second DU 24 included in the DU pool 20. For example, when the amount of traffic that DUs included in the DU pool 20 have to handle decreases, the second DU 24 may be removed from the DU pool 20. Removing the second DU 24 from the DU pool 20 may refer to removing a processing pod corresponding to the second DU 24 to the DU pool 20. For example, removing the second DU 24 from the DU pool 20 may mean that the server processing the data stops operating. By using scale-in, the number of servers that no longer need to operate may be reduced, and resources may be saved.

When scale-out is performed, the second DU 24 has to be connected to the first RU 30 in order to process data generated in the first cell corresponding to the first RU 30. In this case, in order to prevent interruptions in data transmission or data processing, the first DU 22 and the second DU 24 may be simultaneously connected to the first RU 30. While scale-out is being performed, the first RU 30 may be simultaneously connected to the first DU 22 and the second DU 24. The first RU 30 may be connected to the first DU 22 via the first front-haul interface 240. The first RU 30 may be connected to the second DU 24 via a third front-haul interface 244.

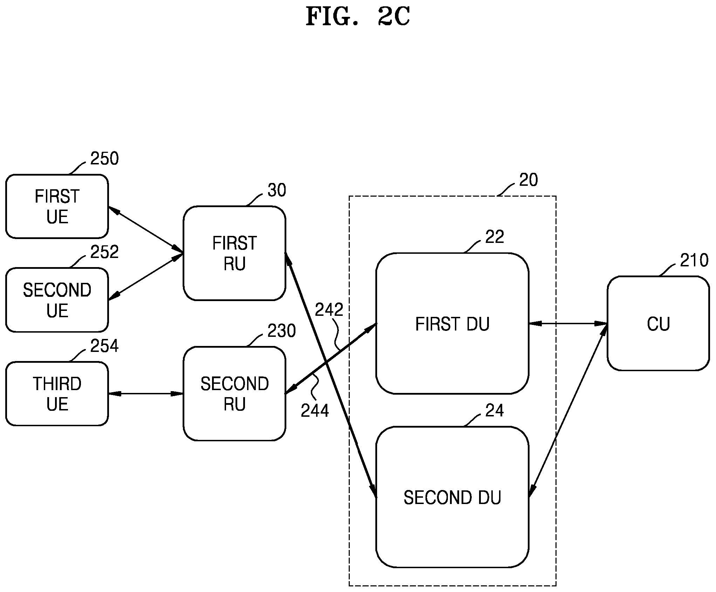

FIG. 2C is a diagram illustrating a communication system after scale-out is completed, according to an embodiment.

If data in the first RU 30 is stably migrated to the second DU 24, the scale-out may be completed. In this case, the first RU 30 is connected to the second DU 24 via the third front-haul interface 244, so that data generated in the first cell may be processed in the second DU 24. The second RU 230 is connected to the first DU 22 via the second front-haul interface 242, so that data generated in the second cell may be processed in the first DU 22.

Referring to FIG. 1, one DU 120 may be connected to a plurality of RUs 110, but one RU 110 may be connected to only one DU 120. However, referring to FIG. 2B, when scale-out is performed, the first RU 30 may be connected to the plurality of DUs (i.e., the first DU 22 and the second DU 24). In this case, the first RU 30 will receive a plurality of pieces of downlink data from the plurality of DUs (i.e., the first DU 22 and the second DU 24), and therefore, a method of processing the plurality of pieces of downlink data is required. In addition, the first RU 30 will transmit uplink data to the plurality of DUs (i.e., the first DU 22 and the second DU 24), and therefore, a method of processing the uplink data is required.

In an embodiment, a front-haul splitter 10 and an operation method of the front-haul splitter 10 may be provided to enable communication between the plurality of DUs and the first RU 30 when scale-out is performed.

In an embodiment, the front-haul splitter 10 may refer to an entity that processes in-phase and quadrature (IQ) data received from the plurality of DUs (e.g., the first DU 22 and the second DU 24) and transmits the processed IQ data to the first RU 30, or processes IQ data received from the first RU 30 and transmits the processed IQ data to the plurality of DUs (e.g., the first DU 22 and the second DU 24). The front-haul splitter 10 may be implemented as an electronic device or a software module. For example, the front-haul splitter 10 may be implemented as a separate electronic device that is separated from the DU pool 20 and the first RU 30. For example, the front-haul splitter 10 may be implemented as an electronic device or software module included in the DU pool 20 or the first RU 30.

In an embodiment, the methods described below may also be applied when scale-in is performed.

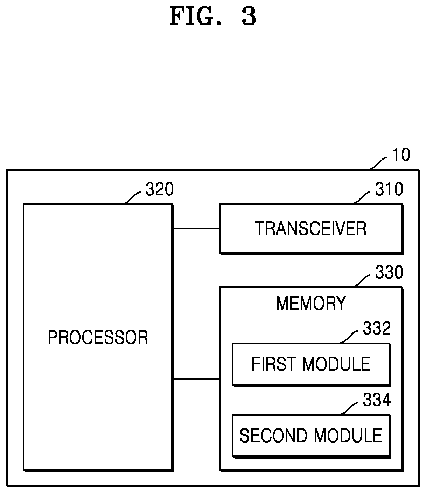

FIG. 3 is a device diagram of the front-haul splitter 10 according to an embodiment.

The front-haul splitter 10 may be composed of a transceiver 310, a processor 320, and a memory 330. The components of the front-haul splitter 10 are not limited to the above example. For example, the front-haul splitter 10 may include more or fewer components than the components described above. In an embodiment, the transceiver 310, the processor 320, and the memory 330 may be implemented in the form of a single chip. Furthermore, the processor 320 may include one or more processors.

The transceiver 310 collectively refers to a receiver of the front-haul splitter 10 and a transmitter of the front-haul splitter 10, and may transmit and receive signals to and from a UE or network entity, the DU pool 20, the CU, and the first RU 30. The signals transmitted to and received from the UE or network entity may include control information and data. To achieve this, the transceiver 310 may include an RF transmitter for up-converting and amplifying a frequency of a signal being transmitted and an RF receiver for low-noise amplifying a received signal and down-converting its frequency. However, this is merely an embodiment of the transceiver 310, and components of the transceiver 310 are not limited to the RF transmitter and the RF receiver.

Additionally, the transceiver 310 may perform functions for transmitting and receiving signals via a radio channel. For example, the transceiver 310 may receive a signal via a radio channel and output the signal to the processor 320 and transmit a signal output from the processor 320 via the radio channel.

The memory 330 may store data and programs necessary for operations of the front-haul splitter 10. Furthermore, the memory 330 may store control information or data in a signal obtained by a device. The memory 330 may include storage media such as read-only memory (ROM), random access memory (RAM), hard discs, compact disc ROM (CD-ROM), and digital video discs (DVDs), or a combination of the storage media. Furthermore, the memory 330 may not exist separately but may be configured to be included in the processor 320. The memory 330 may consist of volatile memory, non-volatile memory, or a combination of volatile and non-volatile memory. The memory 330 may also provide stored data according to a request from the processor 320.

The memory 330 may include at least one first module 332, or a second module 334. For example, the first module 332 may refer to a software module for processing downlink data received by the front-haul splitter 10. For example, the first module 332 may refer to a software module for processing a plurality of pieces of downlink IQ data received by the front-haul splitter 10 from the DU pool 20 and transmitting the resulting downlink IQ data to the first RU 30. For example, the second module 334 may refer to a software module for processing uplink data received by the front-haul splitter 10. For example, the second module 334 may refer toa software module for processing uplink IQ data received by the front-haul splitter 10 from the first RU 30 and transmitting the uplink IQ data to the DU pool 20.

The processor 320 may control a series of processes such that the front-haul splitter 10 may operate according to the embodiment of the present disclosure. For example, the processor 320 may receive control signals and data signals via the transceiver 310 and process the received control signals and data signals. The processor 320 may transmit the processed control signals and data signals via the transceiver 310. In addition, the processor 320 may write data to and read data from the memory 330. The processor 320 may perform functions of a protocol stack required by communication standards. To this end, the processor 320 may include at least one processor or microprocessor. In an embodiment, a portion of the transceiver 310 or the processor 320 may be referred to as a communication processor (CP).

The processor 320 may be configured as one or a plurality of processors. In this case, the one or plurality of processors may be a general-purpose processor such as a central processing unit (CPU), an application processor (AP), a digital signal processor (DSP), etc., a dedicated graphics processor, such as a graphics processing unit (GPU) and a vision processing unit (VPU), or a dedicated artificial intelligence (AI) processor, such as a neural processing unit (NPU). For example, if the one or plurality of processors is a dedicated AI processor, the dedicated AI processor may be designed with a hardware structure specialized for processing a specific AI model.

In an embodiment, the processor 320 may control the transceiver 310 to respectively receive first downlink IQ data 510 and second downlink IQ data 520 from the first DU 22 and the second DU 24 connected to the front-haul splitter 10.

In an embodiment, the processor 320 may generate third downlink IQ data 530, based on the first downlink IQ data and the second downlink IQ data.

In an embodiment, the processor 320 may control the transceiver 310 to transmit the third downlink IQ data 530 to the RU 30 connected to the front-haul splitter 10.

In an embodiment, the processor 320 may control the transceiver 310 to transmit identification information of the front-haul splitter 10 to the at least one first DU 22, the second DU 24, or the RU 30.

In an embodiment, the processor 320 may control the transceiver 310 to receive first uplink IQ data 910 from the RU 30.

In an embodiment, the processor 320 may identify second uplink IQ data 920 based on at least one of the first uplink IQ data 910, information about a target DU, or the number of DUs connected to the front-haul splitter 10.

In an embodiment, the processor 320 may control the transceiver 310 to transmit the second uplink IQ data 920 to the first DU 22.

In an embodiment, the processor 320 may control the transceiver 310 to transmit third uplink IQ data 930 to the second DU 24.

In an embodiment, the processor 320 may control the transceiver 310 to receive scheduling information from the at least one first DU 22 or the second DU 24.

In an embodiment, the processor 320 may identify information about a target DU based on the scheduling information.

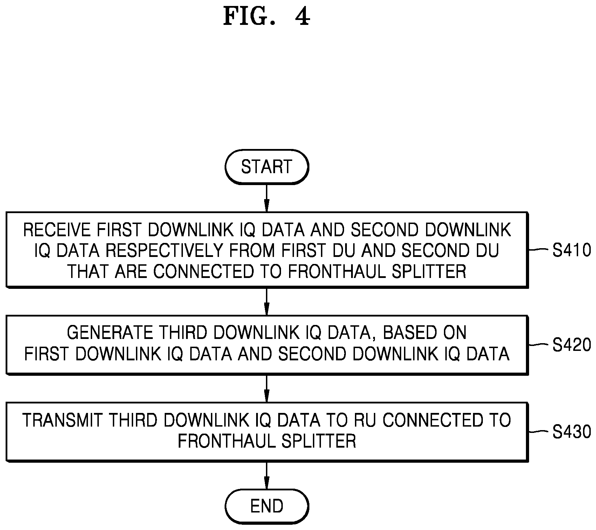

FIG. 4 is a diagram illustrating an operation method of the front-haul splitter 10, according to an embodiment.

In an embodiment, the front-haul splitter 10 may be included in the DU pool 20 including the first DU 22 and the second DU 24.

In an embodiment, the front-haul splitter 10 may be included in the RU 30.

In operation S410, the front-haul splitter 10 may respectively receive the first downlink IQ data 510 and the second downlink IQ data 520 from the first DU 22 and the second DU 24 that are connected to the front-haul splitter 10.

In an embodiment, the first downlink IQ data 510 and the second downlink IQ data 520 may be received based on identification information of the front-haul splitter 10.

In an embodiment, the first downlink IQ data 510 and the second downlink IQ data 520 may be received based on time resource allocation information. For example, the time resource allocation information may include information about allocated slots or symbols.

In operation S420, the front-haul splitter 10 may generate the third downlink IQ data 530, based on the first downlink IQ data 510 and the second downlink IQ data 520.

In an embodiment, the first downlink IQ data 510 may be an IQ data value corresponding to downlink data.

In an embodiment, the second downlink IQ data 520 may be an IQ data value corresponding to downlink data.

In an embodiment, the second downlink IQ data 520 may be a value of (0,0).

In an embodiment, the third downlink IQ data 530 may correspond to a value of a vector sum of the first downlink IQ data 510 and the second downlink IQ data 520.

In operation S430, the front-haul splitter 10 may transmit the third downlink IQ data 530 to the RU 30 connected to the front-haul splitter 10.

In an embodiment, the front-haul splitter 10 may transmit identification information of the front-haul splitter 10 to the at least one first DU 22, the second DU 24, or the RU 30.

In an embodiment, the identification information of the front-haul splitter 10 may include at least one MAC address of the front-haul splitter 10, or identification information associated with an Internet Protocol (IP) of the front-haul splitter 10. For example, the identification information associated with the IP of the front-haul splitter 10 may include at least one IP port information, or an IP address.

In an embodiment, the third downlink IQ data 530 may be transmitted based on the identification information of the front-haul splitter 10.

In an embodiment, the front-haul splitter 10 may transmit the third uplink IQ data 930 to the second DU 24.

In an embodiment, the second uplink IQ data 920 and the third uplink IQ data 930 may each include the same value as the first uplink IQ data 910.

In an embodiment, the second uplink IQ data 920 and the third uplink IQ data 930 may be a replicated version of the first uplink IQ data 910, based on the number of DUs connected to the front-haul splitter 10.

In an embodiment, the front-haul splitter 10 may receive scheduling information from the at least one first DU 22, or the second DU 24.

In an embodiment, the front-haul splitter 10 may identify information about a target DU based on the scheduling information.

In an embodiment, based on the information about the target DU, the first DU 22 may be identified as a target DU for transmitting the second uplink IQ data 920 including the same value as the first uplink IQ data 910.

In an embodiment, the first uplink IQ data 910 may be received based on the identification information of the front-haul splitter 10.

In an embodiment, the second uplink IQ data 920 and the third uplink IQ data 930 may be transmitted based on the identification information of the front-haul splitter 10.

In an embodiment, the identification information of the front-haul splitter 10 may include at least one MAC address of the front-haul splitter 10, or identification information associated with an IP of the front-haul splitter 10. For example, the identification information associated with the IP of the front-haul splitter 10 may include at least one IP port information, or an IP address.

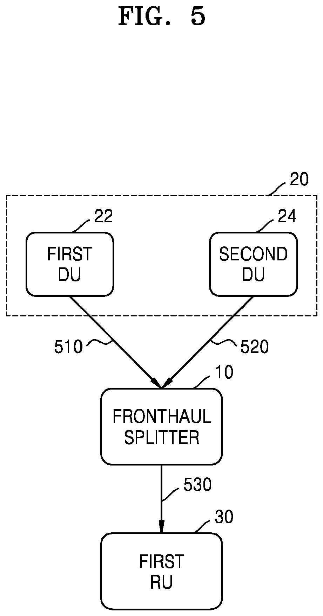

FIG. 5 is a diagram illustrating a method, performed by the front-haul splitter 10, of processing downlink data, according to an embodiment.

In an embodiment, downlink data may refer to data that is transmitted from the DU pool 20 to the first RU 30. Physical channels for transmitting the downlink data may include a PDCCH, a PDSCH, and a PBCH. For example, a PDCCH may refer to a channel used to transmit control information (e.g., downlink control information (DCI)), but is not limited to the stated example. A PDSCH may refer to a channel used to transmit user data, but is not limited to the stated example. A PBCH refers to a channel for carrying a broadcast message, and for example, may refer to a channel for transmitting cell system information, but is not limited to the stated example.

In an embodiment, the downlink data may be transmitted in the form of IQ data. The front-haul splitter 10 may receive the first downlink IQ data 510 from the first DU 22 via a front-haul interface. The front-haul splitter 10 may receive the second downlink IQ data 520 from the second DU 24 via the front-haul interface. The front-haul splitter 10 may generate the third downlink IQ data 530, based on at least one of the first downlink IQ data 510 or the second downlink IQ data 520.

A method by which the front-haul splitter 10 connected to the plurality of DUs receives the plurality of pieces of downlink IQ data and generates one piece of third downlink IQ data 530 for transmission to the first RU 30 is described in more detail below.

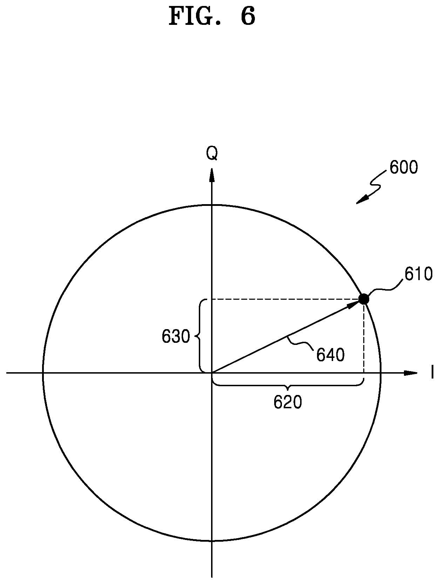

FIG. 6 is a diagram illustrating IQ data according to an embodiment.

In an embodiment, the first downlink IQ data 510, the second downlink IQ data 520, and the third downlink IQ data 530 may be data in the same format as IQ data 610.

In the present disclosure, a plurality of DUs may transmit and receive IQ data to and from an RU. Accordingly, the front-haul splitter 10 may process the IQ data 610 transmitted and received between the plurality of DUs and the RU.

FIG. 6 is a diagram illustrating the IQ data 610 in an IQ plane 600. The horizontal axis on the IQ plane 600 may represent an in-phase (I) component, and an I value 620 of the IQ data 610 may represent a component having the same phase as the IQ data 610. The vertical axis on the IQ plane 600 may represent a quadrature (Q) component, and a Q value 630 of the IQ data 610 may represent a component that is 90° out of phase with respect to the IQ data 610. In addition, a length 640 of a vector of the IQ data 610 may represent an amplitude of the IQ data 610.

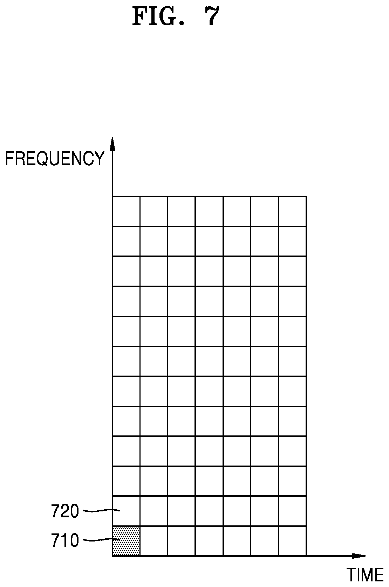

FIG. 7 is a diagram illustrating a transmission resource in which IQ data is transmitted, according to an embodiment.

For example, the first DU 22 and the second DU 24 may transmit downlink IQ data to the front-haul splitter 10 by using scheduled resources. The downlink IQ data may be modulated by using a specific transmission resource (e.g., a resource element (RE)) in a resource grid via a predetermined scheme, and transmitted to the front-haul splitter 10.

The front-haul splitter 10 may receive the first downlink IQ data 510 from the first DU 22 by using a first resource 710 allocated to the first DU 22. The front-haul splitter 10 may receive the second downlink IQ data 520 from the second DU 24 by using a second resource 720 allocated to the second DU 24. For example, the allocated first resource 710 and the allocated second resource 720 may each correspond to at least one RE, but are not limited thereto.

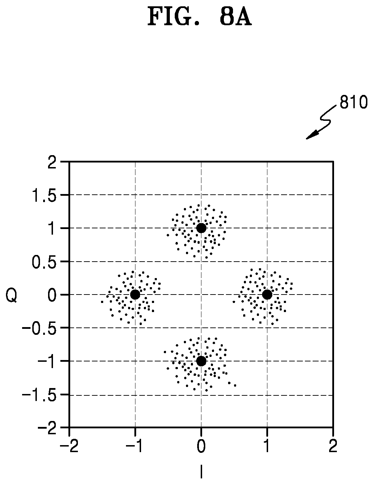

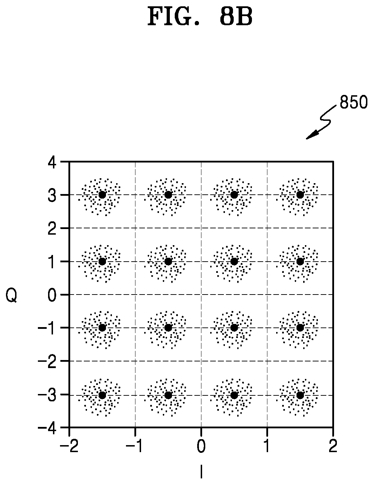

The first DU 22 and the second DU 24 may each convert the downlink data by using a predetermined modulation scheme and transmit the modulated data to the front-haul splitter 10 in the form of IQ data. The front-haul splitter 10 may generate the third downlink IQ data 530, based on the first downlink IQ data 510 and the second downlink IQ data 520. A method of generating the third downlink IQ data 530 is described in detail below with reference to FIGS. 8A and 8B.

FIG. 8A is a diagram illustrating a modulation scheme for downlink data transmitted on a PDCCH and a PBCH, according to an embodiment.

The DUs included in the DU pool 20 may determine a modulation scheme for downlink data based on characteristics of the downlink data to be transmitted.

For example, downlink data transmitted on a PDCCH and downlink data transmitted on a PBCH may be modulated using a quadrature phase-shift keying (QPSK) scheme 810 as shown in FIG. 8A, but are not limited to the above-described example. PSK modulation may refer to a method of distinguishing signals by using only a direction. For example, downlink data transmitted on a PDCCH and downlink data transmitted on a PBCH may be modulated using a PSK scheme.

In an embodiment, when downlink data is transmitted on a PDCCH, the first DU 22 may transmit an IQ data value corresponding to the downlink data to the front-haul splitter 10, and the second DU 24 may transmit an IQ data value corresponding to the downlink data to the front-haul splitter 10. That is, the first downlink IQ data 510 and the second downlink IQ data 520 may both have the same value. For example, when a plurality of DUs transmit pieces of downlink data to the front-haul splitter 10 on a PDCCH, the plurality of DUs may transmit a plurality of pieces of IQ data having the same value to the front-haul splitter 10. The front-haul splitter 10 may reconstruct signals transmitted by the plurality of DUs by calculating a vector sum for the received plurality of pieces of IQ data. Therefore, the front-haul splitter 10 may generate the third downlink IQ data 530 with a value equal to a value of the vector sum of the first downlink IQ data 510 and the second downlink IQ data 520.

In an embodiment, when downlink data is transmitted on a PDCCH, the first DU 22 may transmit an IQ data value corresponding to the downlink data to the front-haul splitter 10, and the second DU 24 may transmit a value (0, 0) to the front-haul splitter 10. That is, the first downlink IQ data 510 may be the IQ data value corresponding to the downlink data, and the second downlink IQ data 520 may be the value (0, 0). For example, when a plurality of DUs (e.g., N DUs) transmit pieces of downlink data to the front-haul splitter 10 on a PDCCH, the DUs may transmit signals by allocating REs in a mutually exclusive manner. For this reason, one DU may transmit an IQ data value corresponding to downlink data to the front-haul splitter 10, while the remaining DUs (e.g., N-1 DUs) may transmit a plurality of pieces of IQ data each with a value of (0, 0) to the front-haul splitter 10. The front-haul splitter 10 may reconstruct signals transmitted by the plurality of DUs by calculating a vector sum for the received plurality of pieces of IQ data. Therefore, the front-haul splitter 10 may generate the third downlink IQ data 530 with a value equal to a value of the vector sum of the first downlink IQ data 510 and the second downlink IQ data 520.

In an embodiment, when downlink data is transmitted on a PBCH, the first DU 22 may transmit an IQ data value corresponding to the downlink data to the front-haul splitter 10, and the second DU 24 may transmit an IQ data value corresponding to the downlink data to the front-haul splitter 10. That is, the first downlink IQ data 510 and the second downlink IQ data 520 may both have the same value. For example, when a plurality of DUs transmit pieces of downlink data to the front-haul splitter 10 on a PBCH, the plurality of DUs may transmit a plurality of pieces of IQ data having the same value to the front-haul splitter 10. The front-haul splitter 10 may reconstruct signals transmitted by the plurality of DUs by calculating a vector sum for the received plurality of pieces of IQ data. Therefore, the front-haul splitter 10 may generate the third downlink IQ data 530 with a value equal to a value of the vector sum of the first downlink IQ data 510 and the second downlink IQ data 520.

In an embodiment, when downlink data is transmitted on a PBCH, the first DU 22 may transmit an IQ data value corresponding to the downlink data to the front-haul splitter 10, and the second DU 24 may transmit a value (0, 0) to the front-haul splitter 10. That is, the first downlink IQ data 510 may be the IQ data value corresponding to the downlink data, and the second downlink IQ data 520 may be the value (0, 0). For example, when a plurality of DUs (e.g., N DUs) transmit pieces of downlink data to the front-haul splitter 10 on a PBCH, the DUs may transmit signals by allocating REs in a mutually exclusive manner. For this reason, one DU may transmit an IQ data value corresponding to the downlink data to the front-haul splitter 10, while the remaining DUs (e.g., N-1 DUs) may transmit pieces of IQ data with a value of (0, 0) to the front-haul splitter 10. The front-haul splitter 10 may reconstruct signals transmitted by the plurality of DUs by calculating a vector sum for the received plurality of pieces of IQ data. Therefore, the front-haul splitter 10 may generate the third downlink IQ data 530 with a value equal to a value of the vector sum of the first downlink IQ data 510 and the second downlink IQ data 520.

FIG. 8B is a diagram illustrating a modulation scheme for downlink data transmitted on a PDSCH, according to an embodiment.

FIG. 8B is a diagram illustrating IQ data modulated using a 16 quadrature amplitude modulation (16-QAM) scheme. For example, downlink data transmitted on a PDSCH may be modulated using a PSK or QAM scheme, but is not limited to the stated examples. The QAM scheme may refer to a method of distinguishing signals by using both direction and magnitude. As a non-limiting example, PSK may include QPSK, 8-PSK, 16-PSK, and 32-PSK, etc. As a non-limiting example, QAM may include 4-QAM, 16-QAM, 64-QAM, and 256-QAM, etc.

In an embodiment, when downlink data is transmitted on a PDSCH, the first DU 22 may transmit an IQ data value corresponding to the downlink data to the front-haul splitter 10, and the second DU 24 may transmit a value (0, 0) to the front-haul splitter 10. That is, the first downlink IQ data 510 may be the IQ data value corresponding to the downlink data, and the second downlink IQ data 520 may be the value (0, 0). For example, when a plurality of DUs (e.g., N DUs) transmit pieces of downlink data to the front-haul splitter 10 on a PDSCH, the DUs may transmit signals on the PDSCH by allocating REs in an mutually exclusive manner. For this reason, a particular DU may transmit an IQ data value corresponding to the downlink data to the front-haul splitter 10, while the remaining DUs (e.g., N-1 DUs) may transmit pieces of IQ data with a value of (0, 0) to the front-haul splitter 10. The front-haul splitter 10 may reconstruct signals transmitted by the plurality of DUs by calculating a vector sum for the received plurality of pieces of IQ data. Therefore, the front-haul splitter 10 may generate the third downlink IQ data 530 with a value equal to a value of the vector sum of the first downlink IQ data 510 and the second downlink IQ data 520.

In an embodiment, the front-haul splitter 10 may receive a plurality of pieces of downlink IQ data in the frequency domain for every slot or every symbol. The front-haul splitter 10 may generate the third downlink IQ data 530 by merging the plurality of pieces of downlink IQ data. The front-haul splitter 10 may transmit the third downlink IQ data 530 to the first RU 30. The second RU 30 may receive the third downlink IQ data 530 and identify the third downlink IQ data 530.

In an embodiment, the front-haul splitter 10 may identify the first RU 30 based on identification information of the first RU 30. The identification information of the first RU 30 may include address information of the first RU 30.

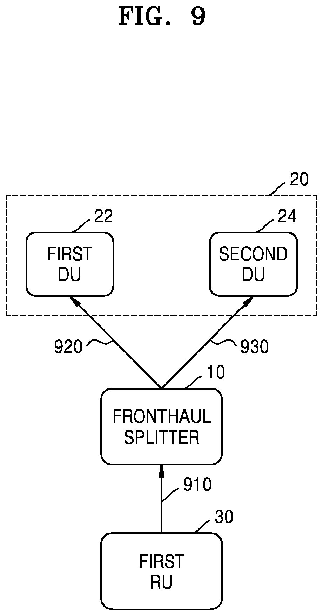

FIG. 9 is a diagram illustrating a method, performed by the front-haul splitter 10, of processing downlink data, according to an embodiment.

In an embodiment, uplink data may refer to data that is transmitted from the first RU 30 to the DU pool 20. Physical channels for transmitting the uplink data may include a physical random access channel (PRACH), a physical uplink control channel (PUCCH), and a physical uplink shared Channel (PUSCH). For example, a PUCCH may refer to a channel used to transmit control information, but is not limited to the stated example. A PUSCH may refer to a channel used to transmit user data, but is not limited to the stated example. A PRACH may refer to a channel for transmitting messages for performing random access, but is not limited to the stated example.

In an embodiment, the uplink data may be transmitted in the form of IQ data. The front-haul splitter 10 may receive the first uplink IQ data 910 from the first RU 30 via a front-haul interface.

In an embodiment, the front-haul splitter 10 may receive one piece of uplink IQ data from the first RU 30 and generate uplink IQ data for transmission to a plurality of DUs. For example, the front-haul splitter 10 may generate, based on the first uplink IQ data 910, at least one of the second uplink IQ data 920 or the third uplink IQ data 930.

In an embodiment, the first uplink IQ data 910, the second uplink IQ data 920, and the third uplink IQ data 930 may be data in the same format as the IQ data 610.

For example, the first RU 30 may transmit the first uplink IQ data 910 to the front-haul splitter 10 by using scheduled resources. The first uplink IQ data 910 may be modulated by using a specific transmission resource (e.g., an RE) within the resource grid via a predetermined scheme, and transmitted to the front-haul splitter 10.

In an embodiment, the front-haul splitter 10 may transmit the second uplink IQ data 920 to the first DU 22 and the third uplink IQ data 930 to the second DU 24. The second uplink IQ data 920 and the third uplink IQ data 930 may each include the same value as the first uplink IQ data 910. Due to the nature of the MAC layer, a DU may only extract and process only resources (e.g., REs) that contain necessary data. Accordingly, the front-haul splitter 10 may duplicate and transmit uplink IQ data to a plurality of DUs connected to the front-haul splitter 10 without identifying which of the plurality of DUs connected to the front-haul splitter 10 is a target DU to which the uplink IQ data needs to be delivered. For example, when uplink data is transmitted on a PRACH, only one of the N DUs needs to process a PRACH, so even when all the DUs receive PRACHs, only one DU needs to perform a PRACH procedure. Accordingly, the front-haul splitter 10 may duplicate and transmit the first uplink IQ data received from the first RU 30 to all connected DUs.

In an embodiment, when duplicating and transmitting an uplink data packet, the front-haul splitter 10 may duplicate and transmit the packet by using broadcast or multicast at the Ethernet or IP layer. For example, a duplication function provided at the Ethernet or IP layer may be used.

In an embodiment, the front-haul splitter 10 may identify a target DU to which uplink IQ data is to be transmitted. The front-haul splitter 10 may identify the first DU 22 as the target DU to which the uplink IQ data is to be transmitted, from among the plurality of DUs. The front-haul splitter 10 may transmit, to the first DU 22, the second uplink IQ data 920 including the same value as the first uplink IQ data 910.

In an embodiment, the front-haul splitter 10 may receive, from the first RU 30, the first uplink IQ data in the frequency domain for every slot or symbol. For example, the front-haul splitter 10 may receive the first uplink IQ data from a low-PHY process. For example, the front-haul splitter 10 may duplicate the first uplink IQ data to generate the second uplink IQ data and the third uplink IQ data.

The front-haul splitter 10 may transmit the second uplink IQ data 920 to the first DU 22. The first DU 22 may receive the second uplink IQ data 920, and identify the second uplink IQ data 920.

The front-haul splitter 10 may transmit the third uplink IQ data 930 to the second DU 24. The second DU 24 may receive the third uplink IQ data 930, and identify the third uplink IQ data 930.

In an embodiment, the front-haul splitter 10 may identify the first DU 22 based on identification information of the first DU 22. The identification information of the first DU 22 may include address information of the first DU 22.

In an embodiment, the front-haul splitter 10 may identify the second DU 24 based on identification information of the second DU 24. The identification information of the second DU 24 may include address information of the second DU 24.

In an embodiment, if the front-haul splitter 10 has identified in advance a DU to which specific uplink data (e.g., RE, PRACH signal, etc.) needs to be transmitted, the front-haul splitter 10 may adopt a method of transmitting the uplink data only to the identified DU.

In an embodiment, the front-haul splitter 10 may identify a type of uplink data. Based on the type of uplink data, a DU to which the corresponding uplink data is to be transmitted may be identified among the plurality of DUs.

In an embodiment, depending on the implementation and operational efficiency of the front-haul splitter 10, the front-haul splitter 10 may exist within the RU 30, exist within the DU pool 20, or exist as a separate entity or component between the RU 30 and the DU pool 20.

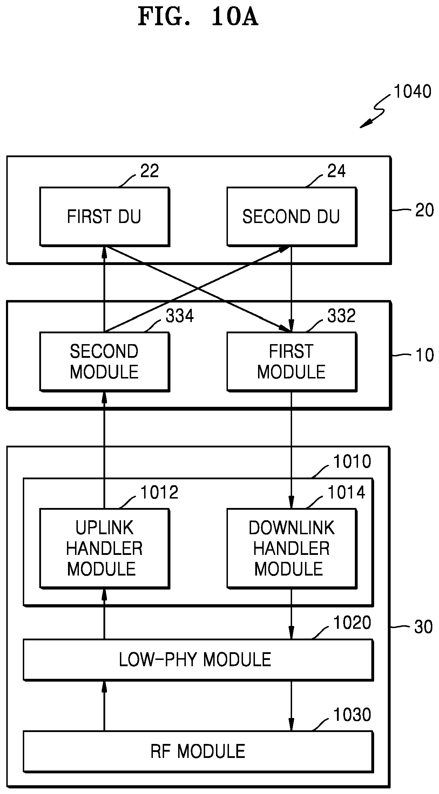

FIG. 10A is a diagram illustrating a communication system 1040 including the front-haul splitter 10, according to an embodiment.

FIG. 10A is a diagram illustrating communication when the front-haul splitter 10 exists as an independent entity or component within the communication system 1040.

In the present disclosure, the RU 30 may include a front-haul handler module 1010, a low-PHY module 1020, and an RF module 1030. A configuration of the RU 30 is not limited to the above-described example, and the RU 30 may include more modules than those described above, and some of the above modules may be omitted.

In the present disclosure, the front-haul handler module 1010 may include an uplink handler module 1012 and a downlink handler module 1014. For example, the uplink handler module 1012 may refer to a module for transmitting and processing uplink data. For example, the downlink handler module 1014 may refer to a module for receiving and processing downlink data.

In an embodiment, the front-haul splitter 10 of the communication system 1040 may transmit identification information of the front-haul splitter 10 to at least one of the first DU 22, the second DU 24, or the RU 30. For example, the identification information of the front-haul splitter 10 may include at least one MAC address of the front-haul splitter 10, or identification information associated with an IP of the front-haul splitter 10.

In an embodiment, the first DU 22 and the second DU 24 of the communication system 1040 may respectively transmit the first downlink IQ data 510 and the second downlink IQ data 520 to the front-haul splitter 10 based on the identification information of the front-haul splitter 10. For example, the first downlink IQ data 510 and the second downlink IQ data 520 may be transmitted to the first module 332 of the front-haul splitter 10.

In an embodiment, the front-haul splitter 10 of the communication system 1040 may transmit the third downlink IQ data 530 to the RU 30 based on at least one of the identification information of the front-haul splitter 10 or identification information of the RU 30. For example, the first module 332 of the front-haul splitter 10 may transmit the third downlink IQ data 530 to the downlink handler module 1014 of the RU 30. The third downlink IQ data 530 may be processed via the downlink handler module 1014, the low-PHY module 1020, and the RF module 1030 of the RU 30, and transmitted to a UE.

In an embodiment, the RU 30 of the communication system 1040 may transmit the first uplink IQ data 910 to the front-haul splitter 10 based on the identification information of the front-haul splitter 10. For example, the uplink handler module 1012 of the RU 30 may transmit the first uplink IQ data 910 to the second module 334 of the front-haul splitter 10. The first uplink IQ data 910 may be data received from the UE and processed via the RF module 1030, the low- PHY module 1020, and the uplink handler module 1012.

In an embodiment, the front-haul splitter 10 of the communication system 1040 may respectively transmit the second uplink IQ data 920 and the third uplink IQ data 930 to the first DU 22 and the second DU 24 based on the identification information of the front-haul splitter 10. For example, the second module 334 of the front-haul splitter 10 may respectively transmit the second uplink IQ data 920 and the third uplink IQ data 930 to the first DU 22 and the second DU 24.

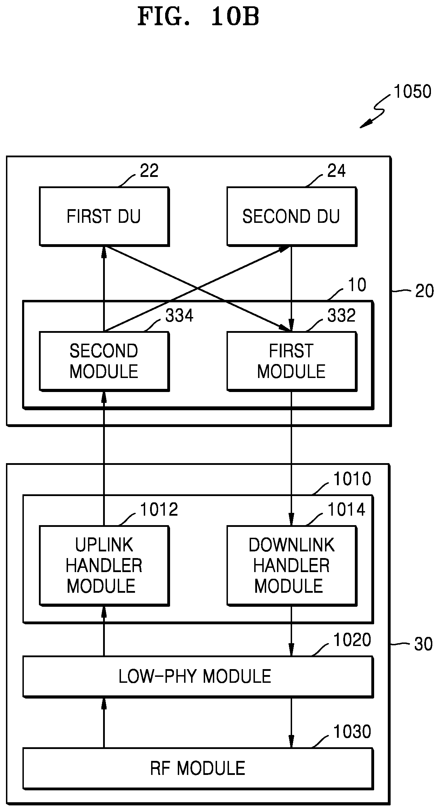

FIG. 10B is a diagram illustrating an in-DU embedded communication system 1050 including the DU pool 20 having the front-haul splitter 10 therein, according to an embodiment.

FIG. 10B illustrates communication performed within the in-DU embedded communication system 1050 in which the front-haul splitter 10 is included as an entity or component in the DU pool 20.

In an embodiment, the first DU 22 and the second DU 24 of the in-DU embedded communication system 1050 may transmit the first downlink IQ data 510 and the second downlink IQ data 520 to the front-haul splitter 10. For example, the first downlink IQ data 510 and the second downlink IQ data 520 may be transmitted to the first module 332 of the front-haul splitter 10.

In an embodiment, the front-haul splitter 10 of the in-DU embedded communication system 1050 may transmit the third downlink IQ data 530 to the RU 30 based on at least one of identification information of the first DU 22, identification information of the second DU 24, or identification information of the RU 30. For example, the first module 332 of the front-haul splitter 10 may transmit the third downlink IQ data 530 to the downlink handler module 1014 of the RU 30. The third downlink IQ data 530 may be processed via the downlink handler module 1014, the low-PHY module 1020, and the RF module 1030 of the RU 30, and transmitted to a UE.

In an embodiment, the RU 30 of the in-DU embedded communication system 1050 may transmit the first uplink IQ data 910 to the front-haul splitter 10 based on at least one of the identification information of the first DU 22, the identification information of the second DU 24, or the identification information of the RU 30. For example, the uplink handler module 1012 of the RU 30 may transmit the first uplink IQ data 910 to the second module 334 of the front-haul splitter 10. The first uplink IQ data 910 may be data received from the UE and processed via the RF module 1030, the low- PHY module 1020, and the uplink handler module 1012.

In an embodiment, the front-haul splitter 10 of the in-DU embedded communication system 1050 may respectively transmit the second uplink IQ data 920 and the third uplink IQ data 930 to the first DU 22 and the second DU 24. For example, the second module 334 of the front-haul splitter 10 may respectively transmit the second uplink IQ data 920 and the third uplink IQ data 930 to the first DU 22 and the second DU 24.

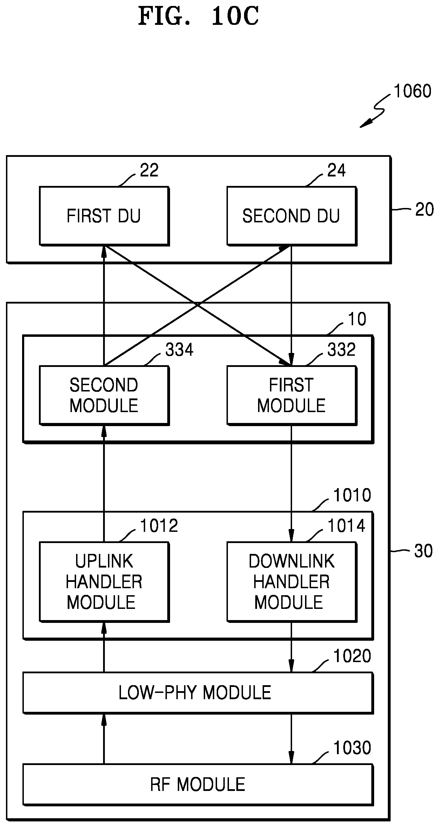

FIG. 10C is a diagram illustrating an in-RU embedded communication system 1060 including the RU 30 having the front-haul splitter 10 therein according to an embodiment.

FIG. 10C illustrates communication when a front-haul splitter 10 is included as an entity or configuration included in an RU 30 within the in-RU embedded communication system 1060.

In an embodiment, the first DU 22 and the second DU 24 of the in-RU embedded communication system 1060 may transmit the first downlink IQ data 510 and the second downlink IQ data 520 to the front-haul splitter 10 based on at least one of identification information of the first DU 22, identification information of the second DU 24, or identification information of the RU 30. For example, the first downlink IQ data 510 and the second downlink IQ data 520 may be transmitted to the first module 332 of the front-haul splitter 10.

In an embodiment, the front-haul splitter 10 of the in-RU embedded communication system 1060 may transmit the third downlink IQ data 530 to the RU 30. For example, the first module 332 of the front-haul splitter 10 may transmit the third downlink IQ data 530 to the downlink handler module 1014 of the RU 30. The third downlink IQ data 530 may be processed by the downlink handler module 1014, the low-PHY module 1020, and the RF module 1030 of the RU 30, and transmitted to a UE.

In an embodiment, the RU 30 of the in-RU embedded communication system 1060 may transmit the first uplink IQ data 910 to the front-haul splitter 10. For example, the uplink handler module 1012 of the RU 30 may transmit the first uplink IQ data 910 to the second module 334 of the front-haul splitter 10. The first uplink IQ data 910 may be data received from the UE and processed via the RF module 1030, the low- PHY module 1020, and the uplink handler module 1012.

In an embodiment, the front-haul splitter 10 of the in-RU embedded communication system 1060 may respectively transmit the second uplink IQ data 920 and the third uplink IQ data 930 to the first DU 22 and the second DU 24 based on at least one of the identification information of the first DU 22, the identification information of the second DU 24, or the identification information of the RU 30. For example, the second module 334 of the front-haul splitter 10 may respectively transmit the second uplink IQ data 920 and the third uplink IQ data 930 to the first DU 22 and the second DU 24.

FIG. 11 is a diagram illustrating a front-haul interface according to an embodiment.

From the lower-layer split perspective, an existing split point between the DU 120 and the RU 110 may be referred to as front-haul. In an embodiment, a front-haul interface between the DU 120 and the RU 110 may refer to an interface that allows IQ data to be transmitted.

In the lower-layer split, there may be several options for how to split functions of the PHY layer into high-PHY functions 1110, which are functions of the PHY layer handled by the DU 120, and low-PHY functions 1120, which are functions of the PHY layer handled by the RU 110. In the present disclosure, the front-haul interface may refer to an interface corresponding to Split Option 7.2 or Split Option 7.2x, as a non-limiting example.

For example, referring to FIG. 11, the DU 120 may perform the high-PHY functions 1110 corresponding to coding, scrambling, modulation, and layer mapping, among the functions of the PHY layer. Furthermore, the RU 110 may perform the low-PHY functions 1120 corresponding to RE mapping, beamforming, inverse fast Fourier transform (IFFT), cyclic prefix (CP) addition, channel filter, interpolation, pigital predistortion (DPD), and digital to analog converter (DAC), among the functions of the PHY layer.

According to an embodiment, a front-haul splitter 10 between a DU and an RU may be provided to address problems occurring in existing communication systems.

In an embodiment, the front-haul splitter 10 may respectively receive first downlink IQ data 510 and second downlink IQ data 520 from a first DU 22 and a second DU 24 connected to the front-haul splitter 10.

In an embodiment, the front-haul splitter 10 may generate third downlink IQ data 530, based on the first downlink IQ data 510 and the second downlink IQ data 520.

In an embodiment, the front-haul splitter 10 may transmit the third downlink IQ data 530 to an RU 30 connected to the front-haul splitter 10.

In the related art, because a front-haul interface does not support vDU scaling (connections between multi-vDUs and an RU), the processing capacity of a DU is determined by a maximum amount of data traffic coming into an RU. According to an embodiment, in a vDU scaling situation, the front-haul interface may support scalable connectivity between multi-vDUs and an RU, thereby providing the effect of enabling vDU operation. In addition, the effect of solving problems related to the front-haul interface that occur when scale-out is performed may be provided.

According to an embodiment, use of the front-haul splitter 10 may enable communication between multi-DUs and an RU, which is not possible with an existing front-haul interface.

In an embodiment, the third downlink IQ data 530 may correspond to a value of a vector sum of the first downlink IQ data 510 and the second downlink IQ data 520.

In an embodiment, the first downlink IQ data 510 may be an IQ data value corresponding to downlink data.

In , the second downlink IQ data 520 may be an IQ data value corresponding to the downlink data, or may be a value of (0, 0).

From an RU perspective, when the RU is connected to N DUs, it will receive N pieces of IQ data, each representing one RE, when receiving downlink data. In addition, REs transmitted by a DU represent various physical channels, and there are various ways to represent the physical channels as IQ data. According to an embodiment, an operation method of the front-haul splitter 10 applicable to any type of downlink data may be provided.

In addition, according to an embodiment, the front-haul splitter 10 may generate uplink IQ data without identifying a type of downlink data to be transmitted, thereby providing the effect of quickly processing data.

In an embodiment, the front-haul splitter 10 may be included in the DU pool 20 including the first DU 22 and the second DU 24, or may be included in the RU 30.

In an embodiment, the front-haul splitter 10 may transmit identification information of the front-haul splitter 10 to at least one of the first DU 22, the second DU 24, or the RU 30.

In an embodiment, the identification information of the front-haul splitter 10 may include at least one MAC address of the front-haul splitter 10, or identification information associated with an IP of the front-haul splitter 10.

In an embodiment, the first downlink IQ data 510 and the second downlink IQ data 520 may be received based on the identification information of the front-haul splitter 10.

In an embodiment, the third downlink IQ data 530 may be transmitted based on the identification information of the front-haul splitter 10.

According to an embodiment, the front-haul splitter 10 may provide an effect whereby flexible implementation thereof is possible in an independent form, a form included in an RU, a form included in a DU pool, etc., depending on the needs of a network environment, a user, etc.

In an embodiment, the front-haul splitter 10 may receive first uplink IQ data 910 from the RU 30.

In an embodiment, the front-haul splitter 10 may identify second uplink IQ data 920 based on at least one of the first uplink IQ data 910, information about a target DU, or the number of DUs connected to the front-haul splitter 10.

In an embodiment, the front-haul splitter 10 may transmit the second uplink IQ data 920 to the first DU 22.

According to an embodiment, an effect may be provided which enables all vDUs including a new DU (e.g., a vDU), connected to an RU, to communicate with the RU during vDU scale-in and scale-out.

According to an embodiment, an effect of enabling seamless scalable virtual DU operation may be provided.

In an embodiment, the front-haul splitter 10 may transmit the third uplink IQ data 930 to the second DU 24.

In an embodiment, the second uplink IQ data 920 and the third uplink IQ data 930 may each include the same value as the first uplink IQ data 910.

In an embodiment, the second uplink IQ data 920 and the third uplink IQ data 930 may be data obtained by duplicating the first uplink IQ data 910 based on the number of DUs connected to the front-haul splitter 10.

When N DUs are connected to an RU, it is difficult for the RU to identify to which DU it should transmit an RE for uplink data that currently needs to be transmitted. However, according to an embodiment of the present disclosure, the front-haul splitter 10 may generate uplink IQ data by taking into account the characteristics of the MAC layer, thereby providing an effect of efficiently transmitting data.

Furthermore, according to an embodiment, the front-haul splitter 10 may generate uplink IQ data without identifying a type of uplink data to be transmitted, thereby providing the effect of quickly processing data.

Also, in the case of a PRACH, only one of the N DUs needs to process a PRACH, so even when all the DUs receive PRACHs only one DU needs to perform a PRACH procedure. Thus, according to an embodiment, an operation method of the front-haul splitter 10 applicable to any type of uplink data may be provided.

In an embodiment, the front-haul splitter 10 may receive scheduling information from the at least one first DU 22, or the second DU 24.

In an embodiment, the front-haul splitter 10 may identify information about a target DU based on the scheduling information.

In an embodiment, based on the information about the target DU, the first DU 22 may be identified as a target DU for transmitting the second uplink IQ data 920 including the same value as the first uplink IQ data 910.

In an embodiment, the first uplink IQ data 910 may be received based on the identification information of the front-haul splitter 10.

In an embodiment, the second uplink IQ data 920 and the third uplink IQ data 930 may be received based on the identification information of the front-haul splitter 10.

In an embodiment, the identification information of the front-haul splitter 10 may include at least one MAC address of the front-haul splitter 10, or identification information associated with an IP of the front-haul splitter 10.

In an embodiment, the first downlink IQ data 510 and the second downlink IQ data 520 may be received based on time resource allocation information.

**In** an embodiment, a front-haul splitter 10 operating in a wireless communication system may include a transceiver 310, and at least one processor 320 coupled to the transceiver 310 to operate therewith.

**In** an embodiment, the at least one processor 320 may be configured to control the transceiver 310 to respectively receive first downlink **IQ** data 510 and second downlink **IQ** data 520 from a first **DU** 22 and a second **DU** 24 connected to the front-haul splitter 10.

**In** an embodiment, the at least one processor 320 may be configured to generate third downlink **IQ** data 530, based on the first downlink **IQ** data and the second downlink **IQ** data.

In an embodiment, the at least one processor 320 may control the transceiver 310 to transmit the third downlink IQ data 530 to an RU 30 connected to the front-haul splitter 10.

In an embodiment, the third downlink IQ data 530 may correspond to a value of a vector sum of the first downlink IQ data 510 and the second downlink IQ data 520.

In an embodiment, the first downlink IQ data 510 may be an IQ data value corresponding to downlink data.

In an embodiment, the second downlink IQ data 520 may be an IQ data value corresponding to the downlink data, or may be a value of (0, 0).

In an embodiment, the at least one processor 320 may be configured to control the transceiver 310 to transmit identification information of the front-haul splitter 10 to at least one first DU 22, the second DU 24, or the RU 30.

In an embodiment, the identification information of the front-haul splitter 10 may include at least one MAC address of the front-haul splitter 10, or identification information associated with an IP of the front-haul splitter 10.

In an embodiment, the first downlink IQ data 510 and the second downlink IQ data 520 may be received based on the identification information of the front-haul splitter 10.

In an embodiment, the third downlink IQ data 530 may be transmitted based on the identification information of the front-haul splitter 10.

In an embodiment, the front-haul splitter 10 may be included in a DU pool 20 including the first DU 22 and the second DU 24, or may be included in the RU 30.

In an embodiment, the at least one processor 320 may be configured to control the transceiver 310 to receive first uplink IQ data 910 from the RU 30.

In an embodiment, the at least one processor 320 may be configured to identify second uplink IQ data 920 based on at least one of the first uplink IQ data 910, information about a target DU, or the number of DUs connected to the front-haul splitter 10.

In an embodiment, the at least one processor 320 may be configured to control the transceiver 310 to transmit the second uplink IQ data 920 to the first DU 22.

In an embodiment, the at least one processor 320 may be configured to control the transceiver 310 to transmit the second uplink IQ data 920 to the first DU 22.

In an embodiment, the second uplink IQ data 920 and the third uplink IQ data 930 may each include the same value as the first uplink IQ data 910.

In an embodiment, the second uplink IQ data 920 and the third uplink IQ data 930 may be data obtained by duplicating the first uplink IQ data 910 based on the number of DUs connected to the front-haul splitter 10.

In an embodiment, the at least one processor 320 may be configured to control the transceiver 310 to receive scheduling information from the at least one first DU 22 or the second DU 24.

In an embodiment, the at least one processor 320 may be configured to identify information about a target DU based on the scheduling information.

In an embodiment, based on the information about the target DU, the first DU 22 may be identified as a target DU for transmitting the second uplink IQ data 920 including the same value as the first uplink IQ data 910.

In an embodiment, the first uplink IQ data 910 may be received based on the identification information of the front-haul splitter 10.

In an embodiment, the second uplink IQ data 920 and the third uplink IQ data 930 may be transmitted based on the identification information of the front-haul splitter 10.

In an embodiment, the identification information of the front-haul splitter 10 may include at least one MAC address of the front-haul splitter 10, or identification information associated with an IP of the front-haul splitter 10.

In an embodiment, a computer-readable recording medium having recorded thereon a program for performing the operation method of the front-haul splitter 10 on a computer may be provided.

A machine-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment, methods according to various embodiments set forth herein may be included in a computer program product when provided. The computer program product may be traded, as a product, between a seller and a buyer. The computer program product may be distributed in the form of a machine-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

## Claims

1. An operation method of a front-haul splitter (10) in a wireless communication system, the operation method comprising:
respectively receiving first downlink in-phase and quadrature (IQ) data (510) and second downlink IQ data (520) from a first distributed unit (DU) (22) and a second DU (24) that are connected to the front-haul splitter (10) (S410);
generating third downlink IQ data (530), based on the first downlink IQ data (510) and the second downlink IQ data (520) (S420); and
transmitting the third downlink IQ data (530) to a radio unit (RU) (30) connected to the front-haul splitter (10) (S430).

2. The operation method of claim 1, wherein the third downlink IQ data (530) corresponds to a value of a vector sum of the first downlink IQ data (510) and the second downlink IQ data (520),
wherein the first downlink IQ data (510) is an IQ data value corresponding to downlink data, and
wherein the second downlink IQ data (520) is an IQ data value corresponding to the downlink data, or is a value of (0, 0).

3. The operation method of claim 1 or 2, further comprising
transmitting identification information of the front-haul splitter (10) to at least one first DU (22), the second DU (24), or the RU (30),
wherein the identification information of the front-haul splitter (10) comprises at least one medium access control (MAC) address of the front-haul splitter (10), or identification information associated with an Internet Protocol (IP) of the front-haul splitter (10).

4. The operation method of any one of claims 1 to 3,
wherein the first downlink IQ data (510) and the second downlink IQ data (520) are received based on the identification information of the front-haul splitter (10), and
wherein the third downlink IQ data (530) is transmitted based on the identification information of the front-haul splitter (10).

5. The operation method of any one of claims 1 to 4, wherein the front-haul splitter (10) is included in a DU pool (20) comprising the first DU (22) and the second DU (24), or is included in the RU (30).

6. The operation method of any one of claims 1 to 5, further comprising:
receiving first uplink IQ data (910) from the RU (30);
identifying second uplink IQ data (920) based on at least one of the first uplink IQ data (910), information about a target DU, or a number of DUs connected to the front-haul splitter (10); and
transmitting the second uplink IQ data (920) to the first DU (22).

7. The operation method of claim 6, further comprising:
transmitting the third uplink IQ data (930) to the second DU (24),
wherein the second uplink IQ data (920) and the third uplink IQ data (930) each comprise a same value as the first uplink IQ data (910), and
wherein the second uplink IQ data (920) and the third uplink IQ data (930) are data obtained by duplicating the first uplink IQ data (910) based on the number of DUs connected to the front-haul splitter (10).

8. The operation method of claim 6 or 7, further comprising:
receiving scheduling information from the at least one first DU (22) or the second DU (24); and
identifying information about a target DU based on the scheduling information,
wherein, based on the information about the target DU, the first DU (22) is identified as a target DU for transmitting the second uplink IQ data (920) comprising a same value as the first uplink IQ data (910).

9. The operation method of any one of claims 6 to 8, wherein the first uplink IQ data (910) is received based on the identification information of the front-haul splitter (10),
wherein the second uplink IQ data (920) and the third uplink IQ data (930) are transmitted based on the identification information of the front-haul splitter (10), and
wherein the identification information of the front-haul splitter (10) comprises the at least one MAC address of the front-haul splitter (10), or the identification information associated with the IP of the front-haul splitter (10).

10. The operation method of any one of claims 1 to 5, wherein the first downlink IQ data (510) and the second downlink IQ data (520) are received based on time resource allocation information.

11. A front-haul splitter (10) operating in a wireless communication system, the front-haul splitter comprising:
a transceiver (310); and
at least one processor (320) coupled to the transceiver (310) to operate therewith, wherein the at least one processor (320) is configured to:
control the transceiver (310) to respectively receive first downlink in-phase and quadrature (IQ) data (510) and second downlink IQ data (520) from a first distributed unit (DU) (22) and a second DU (24) that are connected to the front-haul splitter (10),
generate third downlink IQ data (530), based on the first downlink IQ data (510) and the second downlink IQ data (520), and
control the transceiver (310) to transmit the third downlink IQ data (530) to a radio unit (RU) (30) connected to the front-haul splitter (10).

12. The front-haul splitter of claim 11,
wherein the third downlink IQ data (530) corresponds to a value of a vector sum of the first downlink IQ data (510) and the second downlink IQ data (520),
wherein the first downlink IQ data (510) is an IQ data value corresponding to downlink data, and
the second downlink IQ data (520) is an IQ data value corresponding to the downlink data, or is a value of (0, 0).

13. The front-haul splitter of claim 11 or 12, wherein that at least one processor (320) is further configured to
control the transceiver (310) to transmit identification information of the front-haul splitter (10) to at least one first DU (22), the second DU (24), or the RU (30),
wherein the identification information of the front-haul splitter (10) comprises at least one medium access control (MAC) address of the front-haul splitter (10), or identification information associated with an Internet Protocol (IP) of the front-haul splitter (10).

14. The front-haul splitter of any one of claims 11 to 13,
wherein the first downlink IQ data (510) and the second downlink IQ data (520) are received based on the identification information of the front-haul splitter (10), and
wherein the third downlink IQ data (530) is transmitted based on the identification information of the front-haul splitter (10).

15. The front-haul splitter of any one of claims 11 to 14, wherein the front-haul splitter (10) is included in a DU pool (20) comprising the first DU (22) and the second DU (24), or is included in the RU (30).
